# EUROPÄISCHE PATENTANMELDUNG

(11) **EP 1 408 057 A1**
(43) Veröffentlichungstag der Anmeldung: **14.04.2004**
(21) Anmeldenummer: 03022472.9
(22) Anmeldetag: 08.10.2003
(51) Int. Cl.: C08F 246/00, C08F 220/12, C08F 2/24, C09D 157/00

(54) **Universelles Bindemittel für Bauanwendungen**

(30) Priorität: 11.10.2002 DE 10247498
(71) Anmelder: Polymer Latex GmbH & Co. KG, 45764 Marl (DE)
(72) Erfinder: Brizzolara, Davide, 45701 Herten (DE); Dören, Klaus, 45770 Marl (DE)
(74) Vertreter: Sternagel, Fleischer, Godemeyer & Partner Patentanwälte

(57) **Zusammenfassung**

Die vorliegende Erfindung betrifft Dispersionen, die eine Mindestfilmbildetemperatur < 10 °C und einer Tg von -20 °C bis +20 °C aufweisen, erhältlich durch semikontinuierliche radikalische Emulsionspolymerisation einer Monomermischung enthaltend:
A) 43 bis 68 Gew.-% wenigstens eines Monomers, dessen Homopolymerisat eine Glasübergangstemperatur Tg < 20 °C aufweist,
B) 30 bis 55 Gew.-% wenigsten eines Monomers, dessen Homopolymerisat eine Glasübergangstemperatur Tg > 50 °C aufweist,
C) 2 - 4 Gew.-% eines Gemisches aus
   C1) mindestens einer ethylenisch ungesättigten Monocarbonsäure und
   C2) mindestens einer ethylenisch ungesättigten Dicarbonsäure in saurer Form und/oder mindestens einem Anhydrid einer ethylenisch ungesättigten Dicarbonsäure, wobei die Gesamtmenge an ungesättigten Dicarbonsäuren und Anhydriden von ungesättigten Dicarbonsäuren mindestens 1 Gew.-% beträgt,

I. 1 - 2 Gew.-% mindestens eines nichtionischen Emulgators,
II. 0,8 bis 1,5 Gew.-% mindestens eines ionischen Emulgators und
III. 0,5 bis 1,0 Gew.-% eines sauren Peroxodisulfats,
bei einem pH-Wert von kleiner 2,5, wobei die Gewichtsprozentangaben sich auf die Summe aller Monomeren beziehen und ein Verfahren für deren Herstellung.

## Beschreibung

Die vorliegende Erfindung betrifft Dispersionen, insbesondere wässrige Dispersionen mit einer Mindestfilmbildetemperatur < 10 °C, die aufgrund einer hohen Pigmentbindekraft, Wasserglasstabilität, Elektrolytstabilität und Scherstabilität als lagerstabile Bindemittel für Bauanwendungen geeignet sind.

Wässrige Polymerdispersionen werden in zahlreichen Bauanwendungen als Bindemittel eingesetzt. Dies können Farben und Putze für Innen- und Außenanwendungen, Betondachsteinfarben, Silikatfarben und - putze sowie Baukleber für Fliesen und Bodenbeläge, Abdichtbeschichtungen, Spachtelmassen und mineralische Systeme wie Reparaturmörtel und Estriche sein.

Die an Bindemittel gestellten Anforderungen sind für die verschiedenen Anwendungen unterschiedlich. Bei Innenfarben wird vor allem eine gute Pigmentbindekraft des Bindemittels verlangt, damit die Beschichtung eine hohe mechanische Festigkeit und damit eine hohe Nassabriebfestigkeit nach ISO aufweist. Eine hohe Pigmentbindekraft eines Bindemittels bietet den wirtschaftlichem Vorteil, mit einem geringen Bindemittelanteil eine hohe Nassabriebfestigkeit zu erzielen.

Wird ein Bindemittel eingesetzt, dessen Verfilmungstemperatur oberhalb der Raumtemperatur liegt, muss ein Filmbildehilfsmittel zugesetzt werden, damit Bindemittel und Farbe bei Raumtemperatur verfilmen. Aufgrund der höheren Polymerhärte und der durch den Filmbildehilfsmittelzusatz optimierten Verfilmung haben solche Farben eine gute Abriebbeständigkeit. In jüngster Zeit sind Filmbildehilfsmittel in die öffentliche Diskussion gekommen, da sie verdunsten und somit Emissionen verursachen. Dies gilt auch für als Weichmacher bezeichnete Filmbildehilfsmittel, die zwar einen hohen Siedepunkt von über 250 °C besitzen, aber ebenfalls flüchtig sind und im Laufe der Zeit aus dem Film verdunsten. Man ist daher bemüht auf Filmbildehilfsmittel und Weichmacher in Innenfarben zu verzichten, indem weichere, bei Raumtemperatur verfilmende Bindemittel verwendet werden. Die in der Regel schlechtere Pigmentbindekraft dieser weicheren Polymerdispersionen kann durch einen Mehreinsatz an Bindemittel zwar ausgeglichen werden, was aber die Farben verteuert.

Während für den Einsatz in Innenfarben die Pigmentbindekraft vorrangig ist, werden an Bindemittel für Außenfarben, Putze, Silikatfarben, Betondachsteinfarben, Baukleber und Mörtel andere Anforderungen gestellt, wie z. B. Wasserfestigkeit, Elektrolytstabilität, Scherstabilität und Wasserglasverträglichkeit. Ein Bindemittel, das möglichst universell in verschiedenen Anwendungen einsetzbar ist, bringt logistische Vorteile in der Produktion, muss aber die unterschiedlichen Anforderungen erfüllen.

Wenn z. B. eine Dispersion mit hoher Stabilität ein geringes Pigmentbindevermögen aufweist, kann durch Erhöhung der Polymerhärte die Pigmentbindekraft angehoben werden. Das ist aber beim Verzicht auf Filmbildehilfsmittel nicht möglich. Außer der Filmhärte sind noch andere Faktoren für ein gutes Pigmentbindevermögen ausschlaggebend. Die Pigmentbindekraft wird unter anderem durch die Wechselwirkung von Carboxyl-Gruppen auf der Latex-Oberfläche mit Pigmenten und Füllstoffen verbessert (Synthetic Resin Emulsions, E. Benn Ltd., London, 1972, S. 776 ff). Die Carboxyl-Gruppen werden durch Polymerisation von Monocarbon- oder Dicarbonsäuren eingeführt. Je nach Einbau und Menge der Mono- oder Dicarbonsäuren kann die Elektrolytstabilität, Wasserglasstabilität und Scherstabilität verbessert oder verschlechtert werden. Eine hoher Carboxylierungsgrad des Bindemittels verschlechtert im allgemeinen die Lagerstabilität einer damit hergestellten Farbe.

Die Verbesserung der Pigmentbindekraft durch Verwendung von ethylenisch ungesättigten Dicarbonsäuren, wie bspw. Itaconsäure ist seit längerer Zeit bekannt. In der US-A-3,301,806 werden 0,5 bis 1,5 Gew-% Itaconsäure eingesetzt, wobei der bevorzugte Bereich bei 0,5 bis 0,75 Gew-% liegt und vorzugsweise bei einem pH-Wert von 2,5 - 3,5 polymerisiert wird. Die Pigmentbindekraft der erfindungsgemäßen Dispersion ist aufgrund der geringen Itaconsäuremengen bei hochgefüllten Farben mit einer PVK > 60 nach dem heutigen Stand der Technik nicht zufriedenstellend..

Die WO-A-99/47611 betrifft pigmenthaltige, wässrige Zubereitungen, die mindestens eine Kunststoffdispersion als Bindemittel enthalten, wobei die Dispersion unter anderem dadurch gekennzeichnet ist, das 0,1 bis 1,5 Gew-% Itaconsäure enthalten sind. Die Itaconsäure kann zu 50 % gegen eine ethylenisch ungesättigte Monocarbonsäure ausgetauscht sein.

In JP-A-49001448 wird die Herstellung einer Dispersion auf Basis eines Vinylacetat-Ethylen-Copolymerisats das 1 bis 2 Gew-% Fumarsäure, Itaconsäure oder Maleinsäure enthält beschrieben, die über eine gute Witterungsbeständigkeit, Alkalibeständigkeit, Wasserbeständigkeit, Lagerstabilität und Pigmentbindekraft verfügt.

In der EP-A-65079 wird die Herstellung von Dispersionen mit guten Bindemitteleigenschaften und hoher Stabilität mit einer Mindestfilmbildetemperatur von ca. 10 °C beschrieben. Die geschilderten Dispersionen haben große Nachteile bezüglich der verwendeten Monomere, wie bspw. Butadien, Fumarsäuredialkylester oder Acrylamid. Diene verschlechtern aufgrund der Vernetzung während der Polymerisation die Filmbildungseigenschaften der Dispersion und sind nicht lichtstabil. Fumarsäuredialkylester haben aufgrund des hohen Rohstoffpreises i einen wirtschaftlichen Nachteil. Acrylamid verschlechtert die Wasserfestigkeit und Pigmentbindekraft der Dispersion. Außerdem ist es aufgrund seiner hohen Giftigkeit und Einstufung in die Wassergefährdungsklasse 2 wünschenswert in der Latex-Herstellung auf Acrylamid als stabilisierendes Comonomer zu verzichten.

Die EP-A-612 771 betrifft eine wässrige Polymerdispersion zur Herstellung emi,ssionsarmer Dispersionsfarben, die über eine gute Abriebbeständigkeit und Lagerstabilität verfügen. Nachteil der Dispersion ist die mangelnde Pigmentbindekraft in hochgefüllten Farben. Bei Verwendung von Maleinsäure ist die Pigmentbindekraft sehr gut, aber die Lagerstabilität der mit dem erfindungsgemäßen Bindemittel hergestellten Farben ist ungenügend.

Die WO-A-94/21699 betrifft Dispersionen, die als Bindemittel für weichmacher- und lösemittelfreie Farben mit guter Waschbeständigkeit geeignet sind. Nachteil der dort geschilderten Dispersionen sind die kleinen Teilchengrößen von maximal 95 nm. Aufgrund der geringen Teilchendurchmesser ist die Viskosität bei handelsüblichen Feststoffgehalten von 50 % sehr hoch.

In der WO-A-98/33831 wird ein Verfahren zur Herstellung von Dispersionen auf Basis von Vinylaromat-Acrylat-Itaconsäure-Acrylsäure-Copolymerisaten mit Kern-Schale-Morphologie beschrieben, die eine gute Pigmentbindekraft in Farben mit hoher und niedriger Pigment- Volumen-Konzentration aufweisen und über eine gute Blockfestigkeit verfügen. Der Nachteil einer Kern-Schale-Morphologie mit einem harten nicht verfilmenden Kern, ist der geringere Anteil an verfilmender Dispersion. Um den gleichen effektiven Bindemittel anteil mit der gleichen Pigmentbindekraft zu erreichen, wie bei der gleichen Dispersion mit einer einheitlichen Morphologie, muss mehr Dispersion eingesetzt werden. Das hat bei hochgefüllten Innenfarben, die ohnehin aufgrund des geringen Bindemittelanteils nur eine geringe Klebrigkeit aufweisen, große wirtschaftliche Nachteile.

Die in der EP-A-810 274 beschriebenen Polymerdispersionen haben in hochgefüllten Farben mit einer PVK > 50 % und geringem TiO₂-Gehalt eine nur unzureichende Pigmentbindekraft. Aufgrund der geringen Anteile an ethylenisch ungesättigten Säuren von < 1 % ist die Scherstabilität der erfindungsgemäßen Dispersionen erst bei Verwendung größerer Mengen polarer Verbindungen, wie z. B. Acrylamid zufriedenstellend.

Die oben angeführten Beispiele zeigen, dass es nach dem heutigen Stand der Technik Dispersionen, die ohne Filmbildehilfsmittel- oder Lösemittel-Zusatz bei Raumtemperatur verarbeitbar sind, nicht den Anforderungen nach Stabilität und Pigmentbindekraft genügen. Es ist Stand der Technik bei weichen Dispersionen für eine gute Pigmentbindekraft geringe Anteile einer ethylenisch ungesättigten Monocarbonsäure < 2 Gew.-% einzusetzen.

Aufgabe war es demnach Dispersionen mit einer niedrigen Mindestfilmbildetemperatur von < 10 °C, die eine gute Elektrolytstabilität, Scherstabilität und Wasserglasstabilität aufweisen und als Bindemittel für Farben über eine gute Pigmentbindekraft und Lagerstabilität verfügen, zu finden.

Es wurde nun überraschenderweise gefunden, dass Dispersionen mit einer Mindestfilmbildetemperatur < 10°C über eine gute Pigmentbindekraft und Lagerstabilität in Farben, sowie über eine gute Scher-, Elektrolyt- und Wasserglasstabilität verfügen, wenn auf Acrylamid verzichtet wird und 2 - 4 Gew.-% bezogen auf die Summe aller Monomeren eines Gemisches aus einer ethylenisch ungesättigten Monocarbonsäure und einer ethylenisch ungesättigten Dicarbonsäure in saurer Form, wobei die ungesättigte Dicarbonsäure mit einem Anteil von mindestens 1 Gew.-% vorliegt, einpolymerisiert wird.

Gegenstand der Erfindung sind Dispersionen, die eine Mindestfilmbildetemperatur von < 10 °C und eine Tg von -20 °C bis +20 °C aufweisen, erhältlich durch semikontinuierliche radikalische Emulsionspolymerisation einer Monomermischung enthaltend:
A) 43 bis 68 Gew.-% wenigstens eines Monomers, dessen Homopolymerisat eine Glasübergangstemperatur Tg < 20 °C aufweist,
B) 30 bis 55 Gew.-% wenigsten eines Monomers, dessen Homopolymerisat eine Glasübergangstemperatur Tg > 50 °C aufweist,
C) 2 - 4 Gew.-% eines Gemisches aus
   C1) mindestens einer ethylenisch ungesättigten Monocarbonsäure und
   C2) mindestens einer ethylenisch ungesättigten Dicarbonsäure in saurer Form und/oder mindestens einem Anhydrid einer ethylenisch ungesättigten Dicarbonsäure, wobei die Gesamtmenge an ungesättigten Dicarbonsäuren und Anhydriden von ungesättigten Dicarbonsäuren mindestens 1 Gew.-% beträgt,
in Gegenwart von,
I. 1 - 2 Gew.-% mindestens eines nichtionischen Emulgators,
II. 0,8 bis 1,5 Gew.-% mindestens eines ionischen Emulgators und
III. 0,5 bis 1,0 Gew.-% eines sauren Peroxodisulfats,
bei einem pH-Wert von kleiner 2,5, wobei die Gewichtsprozentangaben sich auf die Summe aller Monomeren beziehen.

Es wurde gefunden, dass auf polare Monomere, wie z. B. Amide von α, β-ungesättigter C₃-C₅-Carbonsäuren, Hydroxy-C₂-C₆-(Meth)acrylsäureester oder N-Vinyllactame verzichtet werden kann. Die erfindungsgemäßen Dispersionen weisen hohe Pigmentbindekraft, Lagerstabilität, Wasserglasstabilität, Elektrolytstabilität und Scherstabilität auf. Die Monomeren der Komponenten A) und B) sind vorzugsweise frei von Carbonsäuregruppen.

Die Mindestfilmbildetemperatur wird auf < 10 °C, bevorzugt von 0 °C bis +5 °C, eingestellt damit eine Verarbeitung bei Raumtemperatur ohne Zugabe von Weichmachern oder Lösemitteln möglich ist, indem harte und weiche Monomere in einem bestimmten Mengenverhältnis polymerisiert werden. In Frage kommende harte Monomere sind Vinylaromaten, wie z. B. Styrol, Methylstyrol oder Methacrylate, wie z. B. Methylmethacrylat, Ethylmethacrylat oder Butylmethacrylat in einer Menge von 30 Gew.-% bis 55 Gew.-%. Als weiches Monomer können Acrylate, wie z. B. Butylacrylat, Ethylacrylat, Methylacrylat oder Ethylhexylacrylat verwendet werden in einer Menge von 45 Gew.-% bis 68 Gew.-%. Die Gewichtsprozentangeben beziehen sich auf die Summe aller Monomeren. Die harten und weichen Monomere können in beliebiger Weise kombiniert werden, um die gewünschte Mindestfilmbildetemperatur einzustellen. Fall zusätzliche Comonomere eingesetzt werden, beeinflussen diese ebenfalls die Mindestfilmbildetemperatur und müssen bei der Einstellung der gewünschten Mindestfilmbildetemperatur berücksichtigt werden.

Die Glasübergangstemperatur (Tg) ist der Mindestfilmbildetemperatur (MFT) verwandt und wird nach dem DSC-Verfahren (Differential Scanning Calorimetry) ermittelt. Die Tg liegt bei Styrol-Acrylat- und Reinacrylat-Copolymerisaten in der Regel 5°C bis 10°C oberhalb der MFT und kann nach der Fox-Gleichung berechnet werden. Nach FOX T. G., Bull. Am. Physics Soc. 1, 3, page 123 (1956) gilt: 1/Tg = x1/Tg1 + X2/Tg2 + .....+ xn/Tgn, wobei xn für den Massenbruch (Gew.-%/100) des Monomers n steht, und Tgn die Glasübergangs-temperatur in Grad Kelvin des Homopolymers des Monomer n ist. Tg-Werte für Homopolymerisate sind in Polymer Handbook 2end Edition, J. Wiley & Sons, New York (1975) aufgeführt. Die Tg liegt bei den erfindungsgemäßen Dispersionen bei -20 °C - +20 °C, bevorzugt von -10 °C bis +10 °C. Die Tg kann experimentell nach der DSC-Methode (Differential Scanning Calorimetry, 20 K/min, midpoint) gemessen werden.

Die Monomeren der Komponente C) werden in einer Gesamtmenge von 2 bis 4 Gew.-%, bevorzugt 2 bis 3 Gew.-%, bezogen auf die Summe der Monomere eingesetzt. Geeignete Monocarbonsäuren sind Acrylsäure und Methacrylsäure. Die Gesamtmenge an ungesättigten Dicarbonsäuren und Anhydriden von ungesättigten Dicarbonsäuren beträgt mindestens 1 Gew.-%, bevorzugt 1 bis 2 Gew.-%. Geeignete Dicarbonsäuren sind Itaconsäure, Maleinsäure und Fumarsäure oder deren Anhydride. Die Säuren werden in ihrer sauren Form eingesetzt.

In einer weiteren Ausführungsform der Erfindung können noch bis zu 2 Gew.-%, bevorzugt von 0,3 bis 1,0 Gew.-%, bezogen auf die Summe aller Monomeren, ethylenisch ungesättigte Silane vorzugsweise Alkoxysilane, wie z. B. Vinyltrimethoxysilan, Vinyltriethoxysilan, Vinyltriacetoxysilan, Vinyl-tert.-butoxydiethoxysilan, Methylvinyl-diethoxysilan, Vinyltris(i-propoxy)silan, Vinyl-tris(s-butoxy)silan, Vinyltris (i-butoxy)silan, Vinyltris(2-n-butoxyethoxy)silan, Aminopropyltriethoxysilan, verwendet werden.

Polare Monomere, wie z. B. Amide von α, β-ungesättigter C₃-C₅-Carbonsäuren, Hydroxy-C₂-C₆-(Meth)acrylsäureester oder N-Vinyllactame werden vorzugsweise nicht eingesetzt.

Als saure Peroxodisulfate sind Natriumperoxodisulfat, Amoniumperoxodisulfat und Kaliumperoxodisulfat besonders geeignet. Diese Initiatoren werden in einer Menge von 0,5 bis 1 Gew.-%, bevorzugt von 0,5 bis 0,7 Gew.-%, bezogen auf die Summe aller Monomeren eingesetzt.

Zur Reduzierung des Restmonomerengehalts kann mit einem Redoxsystem, wie z.B. Natriumformaldehydsulfoxylat und tert.-Butylhydroperoxid nachaktiviert werden. Weitere geeignete Reduktionsmittel sind Natrium-, Kalium-, Ammoniumsulfit oder -bisulfit. Zur Nachaktivierung können auch Natriumperoxodisulfat, Amoniumperoxodisulfat und Kaliumperoxodisulfat nach abgeschlossener Monomerzugabe in kleineren Mengen von 0,01 Gew.-% bis 0,05 Gew.-% einmal oder mehrmals nachgesetzt werden.

Geeignete ionische Emulgatoren sind die Alkali- oder Ammoniumsalze der Alkylethersulfate oder Alkyletherphosphate mit 3 - 50 Ethylenoxideinheiten (EO) und einem Alkylrest von C3 bis C20, Alkylsulfonate oder Arylsulfonate mit einem Alkylrest von C3 bis C20. Es werden 0,8 bis 1,5 Gew.-%, bevorzugt von 1,0 bis 1,2 Gew.-%, bezogen auf die Summe der Monomeren eines ionischen Emulgators eingesetzt.

Geeignete nichtionische Emulgatoren sind Fettalkoholpolyethylenglykolether, endständig geschlossene Fettalkoholpolyethylenglykolether mit 5 - 100 EO-Einheiten und einem Alkylrest von C5 bis C20, Alkylphenolpolyethylenglykolether oder Fettsäurealkanolamidpolyethylenglykolether oder Fettsäurepolyethylenglykolester mit 1 - 16 EO-Einheiten. Diese Emulgatoren werden in einer Menge von 1 Gew.-% bis 2 Gew.-%, bevorzugt von 1,2 bis 1,6 Gew.-%, bezogen auf die Summe der Monomeren vorzugsweise im Zulauf zugegeben oder nach abgeschlossener Polymerisation nachgesetzt.

Die Teilchengröße wird bevorzugt mit interner oder externe Saat auf 160 nm bis 200 nm eingestellt.

Zur Steuerung des Molekulargewichts können während der Polymerisation regelnde Substanzen eingesetzt werden. Bevorzugt sind Mercaptane, wie z. B. n-Dodecylmercaptan, tert-Dodecylmercaptan, Mercaptopropionsäure, Mercaptopropionsäure-methylester, die vorzugsweise in Mengen zwischen 0,1 bis 1 Gew.-% bezogen auf die Summe der Monomeren verwendet werden.

Die Polymerisation wird bei einem pH-Wert < 2,5 durchgeführt. Die Temperatur während der Polymerisation liegt vorzugsweise zwischen 50 °C und 100 °C, besonders bevorzugt ist eine Polymerisationstemperatur von 70 °C bis 90 °C. Die Temperatur kann während der Polymerisation verändert werden.

Die Dispersion wird auf ein Festkörpergehalt von 40 % bis 70 % polymerisiert, bevorzugt wird bei der Rezepturberechnung ein theoretischer Festkörpergehalt von 45 % bis 55 % zu Grunde gelegt.

Die Dispersion wird nach beendeter Polymerisation mit auf einen für die Verarbeitung üblichen pH-Wert eingestellt und je nach Einsatzzweck mit weiteren Hilfs- und Zusatzstoffen (z.B. Entschäumer oder Biozide) versetzt..

Die erfindungsgemäßen Dispersionen verfügen über eine hohe Stabilität und Pigmentbindekraft und sind universell geeignete Bindemittel für wasserbasierende Innenfarben, Außenfarben, Betondachsteinfarben, sowie Wasserglasfarben, Fliesenkleber, Dünnbettkleber, Reparaturmörtel, Dichtschlämme und Estriche. Aufgrund der maximalen Glasübergangstemperatur von +20 °C ist mit den erfindungsgemäßen Dispersionen der Einsatz von Filmbildehilfsmitteln/Weichmachern für die Verarbeitung bei Raumtemperatur nicht nötig.

Gegenstand der Erfindung ist auch ein Verfahren zur Herstellung von Dispersionen, die eine Mindestfilmbildetemperatur < 10 °C und eine Tg von -20 °C bis +20°C aufweisen, durch semikontinuierliches radikalisches Emulsionspolymerisieren einer Monomermischung enthaltend:
A) 43 bis 68 Gew.-% wenigstens eines Monomers, dessen Homopolymerisat eine Glasübergangstemperatur Tg < 20 °C aufweist,
B) 30 bis 55 Gew.-% wenigstens eines Monomers, dessen Homopolymerisat eine Glasübergangstemperatur Tg > 50 °C aufweist,
C) 2 - 4 Gew.-% eines Gemisches aus
   C1) mindestens einer ethylenisch ungesättigten Monocarbonsäure und
   C2) mindestens einer ethylenisch ungesättigten Dicarbonsäure in saurer Form und/oder mindestens einem Anhydrid einer ethylenisch ungesättigten Dicarbonsäure, wobei die Gesamtmenge an ungesättigten Dicarbonsäuren und Anhydriden von ungesättigten Dicarbonsäuren mindestens 1 Gew.-% beträgt,
in Gegenwart von
I. 1 - 2 Gew.-% mindestens eines nichtionischen Emulgators,
II. 0,8 bis 1,5 Gew.-% mindestens eines ionischen Emulgators und
III. 0,5 bis 1,0 Gew.-% eines sauren Peroxodisulfats,
bei einem pH-Wert von kleiner 2,5 und einer Temperatur von 50 bis 100 °C, wobei sich die Gewichtsprozentangaben auf die Summe aller Monomeren beziehen.

Ebenfalls Gegenstand der Erfindung ist die Verwendung der Dispersionen für wasserbasierende Innenfarben, Außenfarben, Betondach-steinfarben sowie Wasserglasfarben, Fliesenkleber, Dünnbettkleber, Reparaturmörtel, Dichtschlämme und Estriche.

Die Erfindung wird durch die folgenden Beispiele näher erläutert.

### Elektrolytstabilität:

100 g Dispersion werden mit 10 g einer 10%igen Calciumchlorid- oder Aluminiumsufat-Lösung versetzt und das Aussehen sofort und eine Stunde nach der Zugabe beurteilt.
1 = kein Koagulat; 2 = wenig Koagulat; 3 = mittelmäßig Koagulat; 4 = viel Koagulat; 5 = komplett koaguliert

### Scherstabilität:

Die Dispersion wird mit einem Ultraturrax mit einer Rührgeschwindigkeit von 5000 Upm geschert. Die Dispersion ist in Ordnung, wenn Sie nach 15 min noch nicht koaguliert ist. Je früher die Dispersion unter der Scherbelastung koaguliert, desto geringer ist ihre Scherstabilität.

### Wasserglasverträglichkeit:

Die Wasserglasverträglichkeit und die Lagerstabilität eines Dispersions-Wasserglasgemisches wurde mit folgender Prüfmischung bestimmt:
Wasser auf insgesamt 100 Tle
Dispersion 50%ig 10
Kaolin W 10
Betolin 25

Die Bestandteile werden in der angegebenen Reihenfolge für 3 min unter Rühren bei 930 Upm gemischt. Der Ansatz wird bei Raumtemperatur in Glasflaschen gelagert. Nach einer bestimmten Zeit wird die Höhe, Konsistenz und Aufrührbarkeit des Bodensatzes beurteilt.
Konsistenz des Bodensatzes: 1 = weich locker; 2 = etwas matschig; 3 = sehr matschig; 4 = matschig, fest; 5 = hart, fest
Aufrührbarkeit des Bodensatzes: 1 = gut. leicht; 2 = gut; 3= mäßig; 4 = mäßig, schlecht; 5 = gar nicht.

### Pigmentbindekraft:

Mit den Dispersionen wurden Farben hergestellt, die nach ISO 13300 geprüft wurden. Bei der Prüfung nach ISO 13300 wird der Farbabrieb nach einer definierten Zahl an Scheuerzyklen bestimmt. Je geringer der Abrieb ist, desto beständiger ist die Farbe.

### Mindestfilmbildetemperatur

Die Mindestfilmbildetemperatur wird bestimmt, indem auf einer Filmbank, an der entlang ein Temperaturgradient angelegt wird, ein Dispersionsfilm aufgezogen wird. An der Grenze unterhalb der Mindestfilmbildetemperatur hat der Dispersionsfilm Risse. An diesem Übergang wird die Mindestfilmbildetemperatur abgelesen.

### Teilchengröße

Die Teilchengröße wurde mit einem Coulter Nanosizer gemessen.

### Beispiel 1

In einem 3 1 Doppelmantelgefäß mit Blattrührer wurden 487,72 g Wasser und 21,45 g eines Saat-Polymerisats als 30%ige Lösung vorgelegt und auf 80 °C aufgeheizt. Nach Erreichen der Solltemperatur wurde mit der Zugabe von 120,82 g einer 4,3%igen Natriumperoxodisulfat-Lösung in 240 min begonnen. Fünf Minuten nach Dosierbeginn der Initiatorlösung wurde die Zugabe der Monomere und Emulgatoren, die in Form einer Emulsion innerhalb 240 min über eine Pumpe in das Reaktionsgefäß dosiert wurden, gestartet. Die Emulsion bestand aus 389,77 g Styrol, 617,09 g Butylacrylat, 10,38 g Acrylsäure, 20,76 g Itaconsäure, 11,42 g Alkylethersulfat-7E0 , 20,76 g Fettalkoholethoxylat-30E0, 0,42 g Natriumcarbonat und 492,8 g Wasser. 305 min nach Dosierbeginn der Initiatorlösung wurden 7,1 g einer 70%igen tert.-Butylhydroperoxid-Lösung zugegeben und gleichzeitig mit der Zugabe von 32,24 g einer 6,4 Gew-%igen Natriumformaldehydsulfoxylat-Lösung innerhalb einer Stunde begonnen. Nach abgeschlossener Zugabe wurde die Reaktorinnentemperatur auf Raumtemperatur gekühlt. Der pH-Wert der Dispersion betrug 1,9. Der Ansatz wurde mit Natronlauge auf einen pH-Wert von 7,6 eingestellt und über ein 45 µ Sieb filtriert. Es wurden keine Anbackungen oder Koagulat festgestellt. Der Feststoffgehalt der Dispersion betrug 49,7 %, die Teilchengröße 181 nm, die Viskosität 56 mPas (Brookfield, Spindel 1/ 30 Upm). Die Mindestfilmbildetemperatur betrug 3 °C.

Anhand der Prüfergebnisse in Tabelle 1 ist ersichtlich, dass die erfindungsgemäße Beispiel rezeptur eine hohe Elektrolytstabilität und Scherstabilität aufweist, eine gute Wasserglasverträglichkeit besitzt und über eine gute Pigmentbindekraft verfügt. Im erfindungsgemäßen Beispiel 1 wurden in Summe 3 Gew-% bezogen auf alle eingesetzten Monomere an ethylenisch ungesättigten Säuren einpolymerisiert, wovon 1 Gew-% Acrylsäure ist und 2 Gew-% Itaconsäure.

### Vergleichsbeispiel A

In einem Doppelmantelgefäß mit Rührer wurden 501,38 g Wasser und 10,98 g einer Polystyrolsaat mit Teilchendurchmesser 35 nm vorgelegt und auf 85 °C aufgeheizt. Bei erreichen der Solltemperatur wurde mit der Zugabe von 92,6 g einer 5%igen Natriumperoxodisulfatlösung in 270 min begonnen. Fünf Minuten später wurde mit der Zugabe einer Emulsion bestehend aus 437,58 g Styrol, 677,82 g Butylacrylat, 22,88 g Methacrylsäure, 17,16 g Fettalkoholethoxylat-30E0, 9,15 g Marlon PS der Fa. Sasol, 10,30 g Alkylethersulfat-7E0 und 472,42 g Wasser begonnen, die über eine Pumpe innerhalb 240 min vollständig in das Reaktionsgefäß dosiert wurde. 365 min nach Dosierbeginn der Initiatorlösung wurden 11,4 g einer 5%igen Natriumperoxodisulfatlösung im Schuss zugegeben. Anschließend wurde die Reaktionstemperatur noch für weitere 3 h gehalten und dann auf Raumtemperatur gekühlt. Der pH-Wert betrug 1,8. Der Ansatz wurde mit Natronlauge auf ein pH-Wert von 7,5 eingestellt und anschließend über ein 45 µm Sieb gesiebt. Es wurden keine Stippen oder Koagulat festgestellt. Der Festkörpergehalt der Dispersion betrug 49,6 %, die Teilchengröße 161 nm, die Viskosität 242 mPas (Brookfield, Spindel 2/ 30 Upm). Die Mindestfilmbildetemperatur beträgt 6 °C.

Das Vergleichsbeispiel zeigt, dass mit 1,5 Gew-% bezogen auf alle eingesetzten Monomere MAS als Comonomer auch eine gute Elektrolytstabilität erreicht wird, aber die Scherstabilität, Wasserglasverträglichkeit und Pigmentbindekraft schlechter sind als bei dem erfindungsgemäßen Beispiel.

### Vergleichsbeispiel B

In einem mit Rührer ausgestatteten Doppelmantel Glasgefäß wurden 911,77 g Wasser, 0,27 g Trikaliumphosphat, 0,27 g EDTA und 25,96 g einer Polystyrolsaat vorgelegt und auf 80 °C aufgeheizt. Nach Erreichen der Solltemperatur wurde mit der Zugabe von 216,6 g einer 5%igen Natriumperoxodisulfatlösung innerhalb 420 min in das Reaktionsgefäß begonnen. Fünf Minuten später wurde mit der Zugabe einer Emulsion bestehend aus 1047,8 g Styrol, 1594 g Butyl acryl at, 8,11 g Vinyltriethoxysilan, 40,56 g Acrylsäure, 13,52 g Acrylamid, 24,34 g Alkylethersulfat-7E0, 1,08 g Trikaliumphosphat und 1354,64 g Wasser begonnen, die innerhalb 360 min vollständig in das Reaktionsgefäß dosiert wurde. Eine Stunde nach Beginn der Initiatorzugabe wurden 129,6 g einer 41%igen Polyethylenglykollösung (Mw=2000g/mol)in das Reaktionsgefäß gegeben. 540 min nach Beginn der Initiatorzugabe wurden nochmals 25,79 g einer 5%igen Natriumperoxodisulfatlösung im Schuss in das Reaktionsgefäß gegeben. Danach wurde die Reaktortemperatur noch für 240 min gehalten und anschließend auf Raumtemperatur gekühlt. Der pH-Wert betrug nach der Polymerisation 1,9. Der Ansatz wurde durch Zugabe von Natronlauge auf pH 7,5 eingestellt. Bei der Filtration über ein 45 pm Sieb wurde kein Koagulat festgestellt. Der Feststoffgehalt betrug 49,7 %, die Teilchengröße 170 nm, die Viskosität 197 mPas (Brookfield, Spindel 2/ 30 Upm. Die MFT beträgt 4 °C.

Die anwendungstechnischen Prüfergebnisse zeigen, das die Vergleichsrezeptur B mit 1,5 Gew-% Acrylsäure und 0,5 Gew-% Acrylamid sehr elektrolyt- und scherstabil ist, jedoch nur eine geringe Wasserglasstabilität hat und nur ein geringes Pigmentbindevermögen aufweist. Beim Vergleichsbeispiel B konnte selbst die Zugabe von 2 Gew-% Polyethylenglykol (Mw=2000 g/mol) die Wasserglasstabilität nicht verbessern.

Die Ergebnisse in Tabelle 1 zeigen deutlich, dass die erfindungsgemäße Dispersion in allen geprüften Eigenschaften gut ist. Die Elektrolytstabilität gegen Calcium- und Aluminium-Ionen ist bei Beispiel 1 und Vergleichsbeispiel B besser ist als bei Vergleichsbeispiel A.

Vergleichsbeispiel A hat außerdem eine weitaus schlechtere Scherstabilität. In der Wasserglasverträglichkeit überzeugt nur das erfindungsgemäße Beispiel 1. Der Stand der Füllstoffe ist ein Maß für die Wasserglasstabilität einer Dispersion. Bei niedrigem Füllstand ist die Wasserglasstabilität gering. Die Aufrührbarkeit und Konsistenz des Bodensatzes ist ein weiteres wichtiges Kriterium zur Bewertung. Bei der erfindungsgemäßen Dispersion ist bei Raumtemperatur- und 60 °C-Lagerung der Bodensatz leicht aufrührbar und die Konsistenz ist über die gesamte Zeit weich und locker. Keines der Vergleichsbeispiele erreicht in der Pigmentbindekraft das hohe Niveau von Beispiel 1. Es wurde in zwei unterschiedlichen Farben geprüft mit jeweils einer PVK > 80 %. In beiden Farben hat die erfindungsgemäße Dispersion eine höhere Pigmentbindekraft als die Vergleichsbeispiele.

**Tabelle 1:**

| Anwendungstechnische Prüfergebnisse | | | |
|---|---|---|---|
| | Beispiel 1 | Beispiel A | Beispiel B |
| Ca-Stab. Sofort / 1 h | 1 / 1 | 1 / 1 | 1 / 1 |
| Al-Stab. Sofort / 1 h | 1 / 1 | 3 / 3 | 1 / 1 |
| | | | |
| Scherstabilität | in Ordnung | nach 2 min koaguliert | in Ordnung |
| | | | |
| Wasserglasverträglichkeit | gut | schlecht | schlecht |
| 1 d/ 4d/ 7d RT | | | |
| Höhe Füllstoff | 2,8/ 2,4 / 2,6 | 1,2/ 1,2/ 1,2 | 1,4/ 1,1/ 1,5 |
| Konsistenz | 1 / 1 / 1 | 1 / 2 / 2 | 2 / 2/ 2 |
| Aufrührbark. Bodens. | 1 / 1 / 1 | 1 / 1 / 1 | 1 / 1/ 1 |
| 1 d/ 4d/ 7d 60 °C | | | |
| Höhe Füllstoff | 2,8/ 2,3 / 2,4 | 2,8/ 2,8/ 2,8 | 1,4/ 1,3/ 1,5 |
| Konsistenz | 1 / 1/ 1 | 3 / 5 / 5 | 3 / 3 / 3 |
| Aufrührbark. Bodens. | 1 / 1/ 1 | 5 / 5 / 5 | 3 / 3 / 3 |
| | | | |
| Pigmentbindekraft ISO Abrieb (µm) | | | |
| 495-02 / 1 (BM 9%) | 35,9 | 75,4 | 70,5 |
| 1183 H / 1 (BM 10 %) | 44,7 | 65,3 | 59,5 |

## Patentansprüche

1. Dispersionen, die eine Mindestfilmbildetemperatur von < 10 °C und eine Tg von -20 °C bis +20 °C aufweisen, erhältlich durch semikontinuierliche radikalische Emulsionspolymerisation einer Monomermischung enthaltend:
A) 43 bis 68 Gew.-% wenigstens eines Monomers, dessen Homopolymerisat eine Glasübergangstemperatur Tg < 20 °C aufweist,
B) 30 bis 55 Gew.-% wenigsten eines Monomers, dessen Homopolymerisat eine Glasübergangstemperatur Tg > 50 °C aufweist,
C) 2 - 4 Gew.-% eines Gemisches aus
C1) mindestens einer ethylenisch ungesättigten Monocarbonsäure und
C2) mindestens einer ethylenisch ungesättigten Dicarbonsäure in saurer Form und/oder mindestens einem Anhydrid einer ethylenisch ungesättigten Dicarbonsäure, wobei die Gesamtmenge an ungesättigten Dicarbonsäuren und Anhydriden von ungesättigten Dicarbonsäuren mindestens 1 Gew.-% beträgt,
in Gegenwart von,
I. 1 - 2 Gew.-% mindestens eines nichtionischen Emulgators,
II. 0,8 bis 1,5 Gew.-% mindestens eines ionischen Emulgators und
III. 0,5 bis 1,0 Gew.-% eines sauren Peroxodisulfats,
bei einem pH-Wert von kleiner 2,5, wobei die Gewichtsprozentangaben sich auf die Summe aller Monomeren beziehen.

2. Dispersionen nach Anspruch 1,
**dadurch gekennzeichnet,**
**dass** als Komponente I Fettalkohoholpolyethylenglykolether, endständig geschlossene Fettalkoholpolyethylenglykolether mit 5 - 100 EO-Einheiten und einem Alkylrest von C5 bis C20, Alkylphenolpolyethylenglykolether oder Fettsäurealkanol-amidpolyethylenglykolether oder Fettsäurepolyethylenglykolester mit 1 -16 EO-Einheiten, eingesetzt werden.

3. Dispersionen nach mindestens einem der Ansprüche 1 bis 2,
**dadurch gekennzeichnet,**
**dass** als Komponente II Alkali- oder Ammoniumsalze der Alkylethersulfate oder Alkyletherphosphate mit 3 bis 50 Ethylenoxideinheiten (EO) und einem Alkylrest von C3 bis C20, Alkylsulfonate oder Arylsulfonate mit einem Alkylrest von C3 bis C20, eingesetzt werden.

4. Dispersionen nach mindestens einem der Ansprüche 1 bis 3,
**dadurch gekennzeichnet,**
**dass** als Komponente III Natriumperoxodisulfat, Amoniumperoxodisulfat und/oder Kaliumperoxodisulfat eingesetzt werden.

5. Dispersionen nach mindestens einem der Ansprüche 1 bis 4,
**dadurch gekennzeichnet,**
**dass** als Komponente A) Verbindungen ausgewählt aus Styrol, Methylstyrol, Methylmethacrylat, Ethylmethacrylat oder Butylmethacrylat, allein oder in Mischungen, eingesetzt werden.

6. Dispersionen nach mindestens einem der Ansprüche 1 bis 5,
**dadurch gekennzeichnet,**
**dass** als Komponente B) Verbindungen ausgewählt aus Butylacrylat, Ethylacrylat, Methylacrylat oder Ethylhexylacrylat, allein oder in Mischungen, eingesetzt werden.

7. Dispersionen nach mindestens einem der Ansprüche 1 bis 6,
**dadurch gekennzeichnet,**
**dass** als Komponente C) Acrylsäure, Methacrylsäure, Itaconsäure, Maleinsäure, Fumarsäure und/oder deren Anhydride eingesetzt werden.

8. Dispersionen nach mindestens einem der Ansprüche 1 bis 7,
**dadurch gekennzeichnet,**
**dass** die Teilchengröße durch interne oder externe Saat auf 160 bis 200 nm eingestellt wird.

9. Dispersionen nach mindestens einem der Ansprüche 1 bis 8,
**dadurch gekennzeichnet,**
**dass** Molekulargewichtsregler eingesetzt werden.

10. Dispersionen nach mindestens einem der Ansprüche 1 bis 9,
**dadurch gekennzeichnet,**
**dass** zusätzlich bis zu 2 Gew.-% ethylenisch ungesättigte Silanmonomere, bezogen auf die Summe aller Monomeren eingesetzt werden.

11. Dispersionen nach mindestens einem der Ansprüche 1 bis 10,
**dadurch gekennzeichnet,**
**dass** diese einen Festkörpergehalt von 40 bis 70 % aufweisen.

12. Dispersionen nach mindestens einem der Ansprüche 1 bis 11,
**dadurch gekennzeichnet,**
**dass** die Herstellung bei 50 bis 100 °C durchgeführt wird.

13. Verfahren zur Herstellung von Dispersionen, die eine Mindestfilmbildetemperatur von < 10 °C und eine Tg von -20 °C bis +20°C aufweisen, durch semikontinuierliches radikalisches Emulsionspolymerisieren einer Monomermischung enthaltend:
A) 43 bis 68 Gew.-% wenigstens eines Monomers, dessen Homopolymerisat eine Glasübergangstemperatur Tg < 20 °C aufweist,
B) 30 bis 55 Gew.-% wenigstens eines Monomers, dessen Homopolymerisat eine Glasübergangstemperatur Tg > 50 °C aufweist,
C) 2 - 4 Gew.-% eines Gemisches aus
C1) mindestens einer ethylenisch ungesättigten Monocarbonsäure und
C2) mindestens einer ethylenisch ungesättigten Dicarbonsäure in saurer Form und/oder mindestens einem Anhydrid einer ethylenisch ungesättigten Dicarbonsäure, wobei die Gesamtmenge an ungesättigten Dicarbonsäuren und Anhydriden von ungesättigten Dicarbonsäuren mindestens 1 Gew.-% beträgt,
in Gegenwart von
I. 1 - 2 Gew.-% mindestens eines nichtionischen Emulgators,
II. 0,8 bis 1,5 Gew.-% mindestens eines ionischen Emulgators und
III. 0,5 bis 1,0 Gew.-% eines sauren Peroxodisulfats,
bei einem pH-Wert von kleiner 2,5 und einer Temperatur von 50 bis 100 °C, wobei sich die Gewichtsprozentangaben auf die Summe aller Monomeren beziehen.

14. Verfahren nach Anspruch 14,
**dadurch gekennzeichnet,**
**dass** Verbindungen nach mindestens einem der Ansprüche 2 bis 10 eingesetzt werden.

15. Verwendung der Dispersionen nach mindestens einem der Ansprüche 1 bis 12, für wasserbasierende Innenfarben, Außenfarben, Betondachsteinfarben sowie Wasserglasfarben, Fliesenkleber, Dünnbettkleber, Reparaturmörtel, Dichtschlämme und Estriche.
